# EUROPÄISCHE PATENTSCHRIFT

(11) **EP 0 443 017 B1**
(45) Veröffentlichungstag und Bekanntmachung des Hinweises auf die Patenterteilung: **08.02.1995**
(21) Anmeldenummer: 90914142.6
(22) Anmeldetag: 01.09.1990
(51) Int. Cl.: H02K 11/00, H02K 23/66, B60S 1/08

(54) **ELEKTRISCHER MOTOR, INSBESONDERE ELEKTRISCHER KLEINMOTOR ZUM ANTRIEB VON SCHEIBENWISCHERN AN KRAFTFAHRZEUGEN**
ELECTRIC MOTOR, IN PARTICULAR SMALL-SIZE ELECTRIC MOTOR FOR DRIVING WINDSCREEN WIPERS IN MOTOR VEHICLES
MOTEUR ELECTRIQUE, NOTAMMENT PETIT MOTEUR ELECTRIQUE POUR ENTRAINER DES ESSUIE-GLACE DANS DES VEHICULES A MOTEUR

(30) Priorität: 09.09.1989 DE 3930144
(43) Veröffentlichungstag der Anmeldung: 28.08.1991
(73) Patentinhaber: ITT Automotive Europe GmbH, 60488 Frankfurt am Main (DE)
(72) Erfinder: ADE, Rolf, D-7120 Bietigheim-Bissingen (DE); BÜHL, Harro, D-7125 Kirchheim (DE); SCHNEIDER, Theodor, D-7121 Freudental (DE)
(86) Internationale Anmeldenummer: EP9001467
(87) Internationale Veröffentlichungsnummer: WO9103856

(56) Entgegenhaltungen:
- EP-A- 0 252 481
- DE-A- 3 542 632
- GB-A- 2 046 997
- US-A- 2 464 847

## Beschreibung

Die Erfindung bezieht sich auf einen elektrischen Motor, insbesondere auf einen elektrischen Kleinmotor zum Antrieb von Scheibenwischern an Kraftfahrzeugen, der die Merkmale aus dem Oberbegriff des Anspruchs 1 aufweist.

Es sind elektrischen Kleinmotoren bekannt, bei denen eine im Motorgehäuse angeordnete Kohlenhalterplatte auch Entstörmittel, wie Spule oder Kondensator, trägt. Sofern es sich um eine ebene Kohlenhalterplatte aus einem Hartpapier handelt, stehen die Entstörmittel frei hoch, so daß sie bei der Montage ausgerichtet werden müssen und trotzdem eine genau definierte Position der Entstörmittel nicht gewährleistet werden kann. Dementsprechend sind auch die Entstörverhältnisse von Motor zur Motor etwas verschieden. Außerdem sind die Entstörmittel auf der Kohlenhalterplatte starken Erschütterungen ausgesetzt.

Es gibt auch schon elektrische Kleinmotoren mit Kohlenhalterplatten aus Kunststoff, die Aufnahmen für Entstörmittel aufweisen, so daß diese gut fixiert werden können und immer die gleiche Lage einnehmen. Den von den Kohlen verursachten Erschütterungen bleiben die Entstörmittel jedoch weiterhin ausgesetzt. Ebenso wirken die vor allem im Blockierfall auftretenden hohen Temperaturen innerhalb des Motorgehäuses noch auf die Entstörmittel ein. Hinzu kommt, daß bei elektrischen Kleinmotoren zum Antrieb von Scheibenwischern an Kraftfahrzeugen neben den meist drei Schleifkohlen und den Entstörmitteln auch noch mindestens ein Thermoschalter innerhalb des Motorgehäuses untergebracht werden soll.

Man ist deshalb schon auf den Gedanken gekommen, Entstörmittel, zu denen auch eine oder mehrere Dioden zum Abbau von Spannungsspitzen beim Ausschalten des Motors gehören können, nicht auf der Kohlenhalterplatte, sondern in einer separaten Halterung unterzubringen, die sich im wesentlichen außerhalb des Motoren- bzw. Getriebegehäuses befinden. So ist es aus der DE-OS 35 42 632 bekannt, eine Halterung mit Entstörmitteln in eine Tasche des Getriebetopfes einzusetzen, die sich an der Außenseite des Getriebetopfes befindet und in einer parallel zum Deckel weisenden Richtung offen ist. Im Lagerschild des Getriebegehäuses befindet sich eine in radialer Richtung offene Aussparung, die das Innere des Motorgehäuses mit der Tasche im Getriebetopf verbindet und durch die die Halterung in das Motorgehäuse hineingreift. Bei dem aus der DE-OS 35 42 632 bekannten elektrischen Motor ist es problematisch, das Motorgehäuse im Bereich der Halterung dicht zu bekommen. Auch sind die Entstörmittel äußeren Einflüssen stark ausgesetzt.

Aus der GB-A-2 046 997 ist ein Elektromotor bekannt, an dessen Gehäuse sich ein Getriebegehäuse anschließt. In einer Tasche dieses Getriebegehäuses ist ein Schalter angeordnet, wobei die Tasche von einem Deckel verschlossen wird. Die Tasche weist keinen Durchgang in das Motorgehäuse auf.

Der Erfindung liegt deshalb die Aufgabe zugrunde, einen elektrischen Motor der eingangs genannten Art so zu gestalten, daß unter Beibehaltung eines automatisationsgerechten Aufbaus die Dichtheit verbessert ist.

Diese Aufgabe wird erfindungsgemäß durch einen elektrischen Motor gelöst, der die Merkmale aus dem Oberbegriff des Anspruchs 1 aufweist und bei dem sich die Halterung in einer Tasche im Innern des Getriebetopfes befindet, die Tasche vom Deckel verschlossen ist und ein nach außen geschlossener Durchgang von der Tasche durch den Lagerschild in das Motorgehäuse führt. Bei einem solchen Motor ist also kein nach außen offener Durchgang im Lagerschild vorhanden, der durch die Halterung nur unvollkommen verschlossen würde. Es sind nur die Durchbrüche im Getriebegehäuse, insbesondere im Deckel des Getriebegehäuses, notwendig, durch die die elektrischen Bauteile in der Halterung sowie die elektrischen Kontakte eines eventuell vorhandenen Endlagenschalters mit einem äußeren Stromnetz, z.B. mit dem Bordnetz eines Kraftfahrzeugs, verbunden sind.

Als elektrisches Bauteil bzw. elektrische Bauteile kann die Halterung auch eine oder mehrere Leiterbahnen aufweisen, die innerhalb des Getriebegehäuses und durch den Lagerschild hindurch eine elektrische Verbindung zwischen am Getriebegehäuse gehaltenen Anschlußsteckern des elektrischen Motors und den Schleifkohlen im Motorgehäuse herstellen. Bei einer solchen Leiterbahn kann es sich z.B. um einen Blechstreifen handeln. Auch ein solcher elektrischer Motor kann leicht dichter gemacht werden als ein Motor, bei dem Kabel oder Leiterbahnen durch zwar mit Kunststoff oder Gummi ausgefüllte, sich jedoch nach außen öffnende Durchgänge des Lagerschilds oder des Motorgehäuses in dieses hineingeführt sind.

Vorteilhafte Ausgestaltungen eines erfindungsgemäßen elektrischen Motors kann man den Unteransprüchen entnehmen.

Insbesondere elektrische Motoren zum Antrieb von Scheibenwischern an Kraftfahrzeugen enthalten im Getriebetopf meist eine Schnecke und ein mit dieser Schnecke kämmendes Schneckenrad. Es hat sich als günstig erwiesen, wenn sich dann die Tasche für die Halterung, vom Schneckenrad aus gesehen, jenseits der Schnecke befindet.

Die sich im Getriebegehäuse befindlichen Getriebeelemente sind normalerweise gefettet und einem gewissen Abrieb unterworfen. Damit die elektrischen Bauteile in der Halterung nicht verschmutzt werden, ist in einer bevorzugten Ausführung eines erfindungsgemäßen elektrischen Motors die Tasche für die Halterung gegen andere Bereiche des Getriebetopfes hin, insbesondere gegen die Bereiche hin, die Getriebeelemente enthalten, abgeschlossen.

Eine gute Abdichtung zwischen Deckel und Getriebetopf erhält man überall dort, wo der Deckel auf einem Rand des Getriebetopfes aufliegt. Deshalb ist gemäß Anspruch 4 der Auflagerand des Getriebetopfes im Bereich des Durchgangs entlang des Lagerschilds fortgeführt.

Damit die elektrischen Verbindungen zwischen den Bauteilen auf der Halterung und elektrischen Bauteilen auf einer Kohlenhalterplatte im Motorgehäuse, also insbesondere den Schleifkohlen auf der Kohlenhalterplatte, mechanisch nicht zu stark beansprucht werden, ist es günstig, wenn die Halterung und die Kohlenhalterplatte durch den Durchgang hindurch aneinander befestigt sind. Die Halterung reicht durch den Durchgang hindurch vorteilhafterweise bis zur Kohlenhalterplatte, so daß eine übliche ebene Kohlenhalterplatte aus einem Hartpapier verwendet werden kann.

Vorteilhafterweise ist die Halterung durch den Durchgang im Lagerschild hindurch in die Tasche des Getriebegehäuses einschiebbar. Bei einer derartigen Ausbildung kann die Halterung wie ein Bauteil betrachtet werden, das wie die Köcher für die Schleifkohlen, die Schleifkohlen selber, Druckfedern oder Thermoschalter zunächst auf der Kohlenhalterplatte befestigt wird. Die gesamte vormontierte Einheit wird dann auf den Lagerschild aufgesetzt, wobei die Halterung durch den Lagerschild hindurchtaucht und in die lasche des Getriebegehäuses gelangt. Entgegen den bisher üblichen Konstruktionen, bei denen sich alle auf der Kohlenhalterplatte befestigten Bauteile im Motorgehäuse befinden, nimmt also nun ein Bauteil einen Platz im Getriebegehäuse ein. Eine solche Lösung erscheint auch für solche Bauteile vorteilhaft, die, wie z.B. Thermoschalter, keine zusätzliche Halterung benötigen, sondern direkt von der Kohlenhalterplatte durch einen Durchgang im Lagerschild hindurch in das Getriebegehäuse hineinragen können.

Der Durchgang im Lagerschild kann im Querschnitt ein bestimmtes Maß nicht überschreiten, so daß auch die Größe der Halterung begrenzt ist, wenn sie durch den Durchgang in die Tasche des Getriebegehäuses eingeschoben werden soll. Es kann deshalb vorteilhaft sein, daß die Halterung von einer durch den Deckel verschließbaren Seite aus in die Tasche des Getriebetopfes einsetzbar ist. Dann kann sie im Querschnitt größer als der Querschnitt des Durchgangs durch den Lagerschild sein. In einem solchen Falle ist es günstig, die Halterung am Deckel zu befestigen, so daß Deckel und Halterung bei der Endmontage des Motors als ein Bauteil aufgesetzt werden können.

Die elektrischen Bauteile an bzw. in der Halterung müssen mit elektrischen Bauteilen innerhalb des Motorgehäuses und mit Außenanschlüssen des elektrischen Motors elektrisch leitend verbunden werden. Es ist deshalb vorteilhaft, wenn die Halterung zu diesem Zweck wenigstens einen Stecker aufweist, der mit einem entsprechenden Gegenstecker zusammenwirkt. Insbesondere ist eine solche Ausbildung dann günstig, wenn ein Gegenstecker am Deckel sitzt.

Vor allem, wenn die Halterung von der durch den Deckel verschließbaren Seite aus in die Tasche des Getriebetopfes einsetzbar ist, kann es vorteilhaft sein, wenn sich in dem Durchgang des Lagerschilds zwischen der Halterung und einer im Motorgehäuse angeordneten Kohlenhalterplatte ein Zwischenstück befindet, an dem elektrische Leitungen befestigt sind. Auch die elektrische Verbindung zwischen der Halterung und dem Zwischenstück wird dann vorteilhafterweise durch Stecker und Gegenstecker hergestellt.

Die Entstörbauteile untereinander sowie Entstörbauteile und Schleifkohlen sind zweckmäßigerweise über Metallbleche elektrisch leitend miteinander verbunden. Diese Metallbleche können fest in die Halterung eingesteckt werden und sind relativ stabil, so daß die Anschlußdrähte der Entstörbauteile leicht an ihnen befestigt werden können. Außerdem können sie zugleich abschnittsweise zu einem Stecker oder Gegenstecker geformt sein.

Über ein an der Halterung befestigtes Metallblech, das zwischen Deckel und Getriebetopf eingeklemmt ist, läßt sich ein Entstörmittel leicht elektrisch leitend mit dem Getriebegehäuse verbinden. Damit insbesondere bestimmte Außenmaße der Halterung nicht überschritten werden und diese durch den Lagerschild hindurch in die lasche des Getriebetopfes einschiebbar ist, ist es vorteilhaft, wenn das Metallblech mit seinem zwischen Deckel und Getriebetopf eingeklemmten Abschnitt tiefer liegt als der Auflagerand am Getriebetopf für den Deckel. Es ist deshalb im Getriebetopf eine Vertiefung vorgesehen, in der sich der besagte Abschnitt des Metallblechs befindet. Zum Einklemmen dieses Abschnitts zwischen Deckel und Getriebetopf ist dann aus dem Deckel eine Lasche ausgeschnitten und abgebogen, die auf das Metallblech drückt. Das durch die Lasche entstandene Loch im Deckel wird vorteilhafterweise mit Kunststoff ausgespritzt.

Für die Anordnung der Entstörmittel an der Halterung wird es als günstig angesehen, wenn die Halterung eine erste Kammer mit einer oder mehreren Entstörspulen und eine zweite Kammer für einen oder mehrere Kondensatoren aufweist. Für eine schlanke Form der Halterung liegen die Kammern, in einer Richtung senkrecht zum Lagerschild betrachtet, hintereinander. Für eine wirksame Entstörung sind die Entstörmittel in bestimmter Weise miteinander, mit den Schleifkohlen und mit den Außenanschlüssen des Elektromotors verbunden. Um die elektrischen Verbindungen auf einfache Weise herstellen zu können, befindet sich die Kammer für einen Kondensator zweckmäßigerweise weiter vom Lagerschild entfernt als die Kammer für eine Entstörspule. An der Halterung vorgesehene Stecker werden bevorzugt zwischen den beiden Kammern angeordnet.

Ausführungsbeispiele eines erfindungsgemäßen elektrischen Motors sind in den Zeichnungen dargestellt. Anhand der Figuren dieser Zeichnungen wird die Erfindung nun näher erläutert.

Es zeigen:
- Fig. 1: ein erstes Ausführungsbeispiel teilweise im Schnitt, teilweise in Ansicht auf das offene Getriebegehäuse,
- Fig. 2: einen Schnitt entlang der Linie II-II aus Fig. 1,
- Fig. 3: eine Innenansicht des Deckels für den Getriebetopf aus den Fig. 1 und 2,
- Fig. 4: eine vormontierte, aus einer bestückten Kohlenhalterplatte und und einer mit Entstörmitteln bestückte Halterung bestehende Baueinheit, wobei kleine konstruktive Unterschiede zu der Kohlenhalterplatte und der Halterung aus den Fig. 1 und 2 bestehen,
- Fig. 5: eine Teilansicht auf Halterung und Kohlenhalterplatte in Richtung des Pfeiles A aus Fig. 4, wobei die Teile, mit denen die Halterung in Fig. 4 bestückt ist, weggelassen sind,
- Fig. 6: eine Ansicht der Halterung in Richtung des Pfeiles B aus Fig. 4,
- Fig. 7: einen gegenüber dem Getriebetopf aus den Fig. 1 und 2 etwas abgewandelten Getriebetopf, der die Halterung aus den Fig. 4 bis 6 aufnehmen kann,
- Fig. 8: eine Ansicht des Getriebetopfes aus Fig. 7 in Richtung auf die innere Seite des Lagerschilds,
- Fig. 9: einen Schnitt entlang der Linien IX-IX aus den Fig. 7 und 8,
- Fig. 10: eine Schaltanordnung, aus der deutlich wird, wie die Entstörmittel bei dem Beispiel aus den Fig. 4 bis 6 untereinander, mit den Kohlen eines zweitourigen Scheibenwischemotors und mit dessen Außenanschlüssen verbunden sind,
- Fig. 11: ein Ausführungsbeispiel in einer Darstellung ähnlich der aus Fig. 1, wobei die Halterung für die Entstörmittel von der offenen, vom Deckel verschlossenen Seite einer Tasche des Getriebetopfes in diesen einsetzbar ist, und
- Fig. 12: einen Schnitt entlang der Linie XII-XII aus Fig. 10.

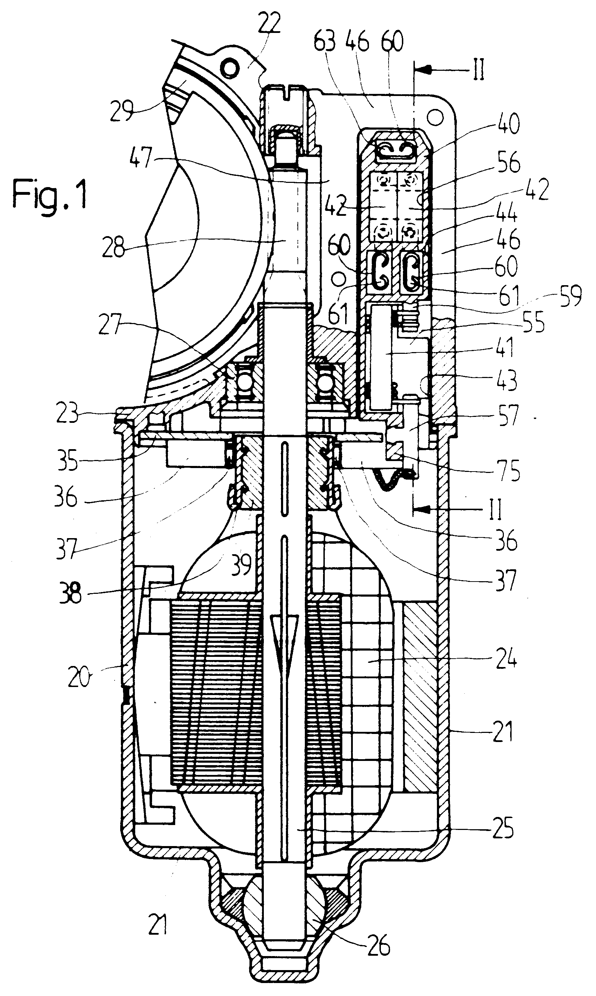

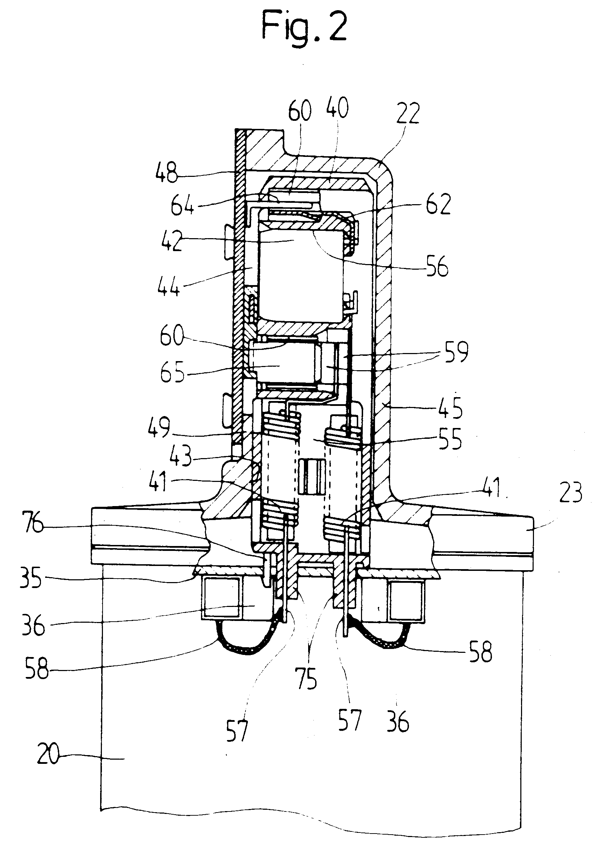

Der Scheibenwischermotor aus den Fig. 1 und 2 besitzt ein tiefgezogenes, topfförmiges Motorgehäuse 20 mit einem Boden 21. An der offenen Seite ist an das Motorgehäuse ein Getriebegehäuse 22 mit einem Lagerschild 23 angeflanscht. Der Anker 24 des Motors ist mit seiner Welle 25 in einem Kalottenlager 26 am Boden 21 und einem Kugellager 27 auf der in das Motorgehäuse zeigenden Innenseite des Lagerschilds 23 drehbar gelagert. Die Ankerwelle 25 ragt durch einen Durchbruch im Lagerschild 23 hindurch in das Getriebegehäuse 22 hinein und ist dort als Schnecke 28 ausgebildet, die mit einem im Getriebegehäuse 22 gelagerten Schneckenrad 29 kämmt. Auf der Innenseite des Lagerschilds 23 ist eine völlig ebene Kohlenhalterplatte 35 befestigt, die senkrecht auf der Ankerwelle 25 steht und auf ihrer dem Lagerschild 23 abgewandten Seite drei metallische Köcher 36 trägt, von denen in den Fig. 1 und 2 jeweils zwei sichtbar sind. In den Köchern 36 befinden sich Schleifkohlen 37, die unter Federdruck auf den Lamellen 38 des Kommutators 39 aufliegen.

Von der dem Lagerschild 23 zugewandten Seite der Kohlenhalterplatte 35 aus steht senkrecht eine Halterung 40 hoch, in die zwei Entstörspulen 41 und zwei Entstörkondensatoren 42 eingesetzt sind. Die Halterung 40 tritt durch einen nach außen geschlossenen Durchgang 43 des Lagerschilds 23 hindurch und liegt in einer Tasche 44 des Getriebetopfes 22, die sich, vom Schneckenrad 29 aus gesehen, jenseits der Schnecke 28 befindet. Die Tasche 44 ist durch den Boden 45 und durch Seitenwände 46 des Getriebetopfes 22 nach außen abgeschlossen. Von den Bereichen des Getriebetopfes 22, in denen sich die Schnecke 28 und das Schneckenrad 29 befinden, ist die Tasche 44 durch eine Zwischenwand 47 getrennt, die parallel zur Schnecke 28 verläuft und die genauso hoch wie die Seitenwände 46 des Getriebetopfes 22 ist. Die oberen Kanten der Seitenwände 46 und der Zwischenwand 47 des Getriebetopfes 22 dienen als Auflageflächen für einen Deckel 48, der aus einem ebenen Blech ausgestanzt ist und den Getriebetopf 22 einschließlich der Tasche 44 verschließt. Auch im Bereich des Durchgangs 43 ist der Auflagerand für den Deckel 48 mit einem Abschnitt 49 entlang des Lagerschilds 23 geführt, so daß der Deckel 48 die Tasche 44 rundum gut abdichten kann.

Die Halterung 40 besitzt eine erste Kammer 55, in der sich die Entstörspulen 41 befinden, und eine zweite Kammer 56 mit den beiden Entstörkondensatoren 42. Die beiden Kammern 55 und 56 liegen, in einer Richtung senkrecht zum Lagerschild 23 betrachtet, hintereinander, wobei sich die Kammer 55 für die Entstörspulen näher an der Kohlenhalterplatte 35 und damit auch am Lagerschild 23 befindet als die Kammer 56 für die Entstörkondensatoren 42. Der zur Verfügung stehende Querschnitt der Halterung 40 hat es als vorteilhaft erscheinen lassen, die Spulen 41 in einer ersten Richtung und die Kondensatoren 42 in einer zweiten, zur ersten Richtung senkrechten Richtung nebeneinander zu legen. Entsprechend sind die beiden Kammern 55 und 56 auch nach verschiedenen Richtungen hin offen.

Jede Spule 41 ist an ihrer einen Seite mit einem Metallblech 57 verbunden, das durch eine die Kammer 55 zur Kohlenhalterplatte 35 hin begrenzenden Wand und durch die Kohlenhalterplatte 35 hindurchgeführt ist. An jedes Blech 57 ist eine Kohlelitze 58 angeschweißt. Auf der anderen Seite ist jede Spule z.B. durch Schweißen mit einem von zwei Metallblechen 59 verbunden, von denen das eine zu einem Anschluß des einen Kondensators und das andere zu einem Anschluß des anderen Kondensators führt. Jedes Metallblech 59 ist außerdem durch ein Stanzbiegeverfahren einstückig mit einer Steckhülse 60 ausgebildet. Die beiden Steckhülsen 60 weisen senkrecht zum Deckel 48 und sind in zwei Kammern 61 der Halterung 40 eingeschoben, die kleiner als die Kammern 55 und 56 sind und sich zwischen diesen befinden.

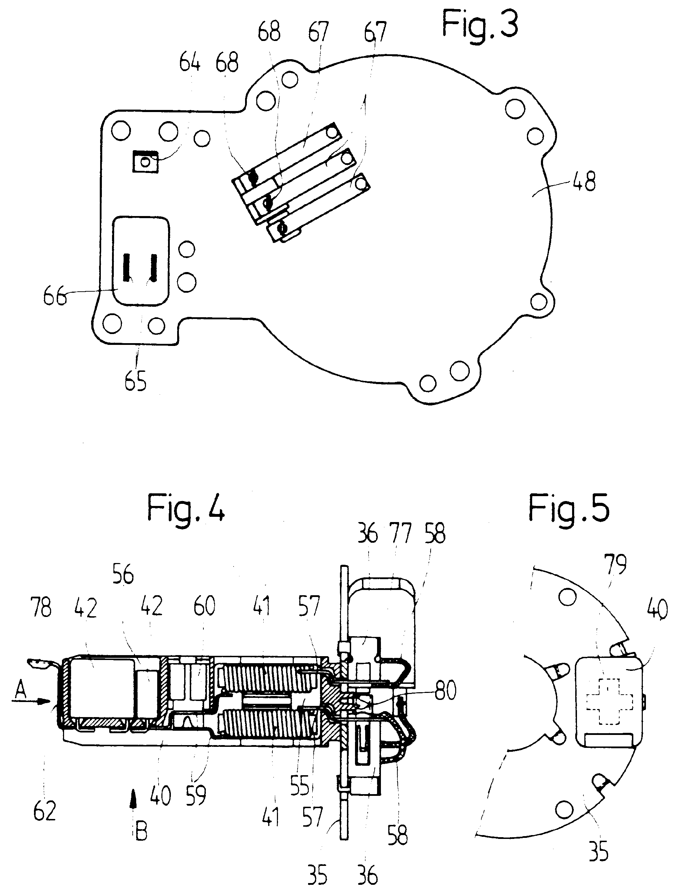

Beide Kondensatoren 42 sind außer mit den Metallblechen 59 gemeinsam an ein weiteres Hetallblech 62 angeschlossen, das ebenfalls einstückig mit einer Steckhülse 60 ausgebidet ist, die sich in einer Kammer 63 am von der Kohlenhalterplatte 35 abgewandten Ende der Halterung 40 befindet und ebenfalls senkrecht zum Deckel 48 gerichtet ist. In der Steckhülse 60 des Metallblechs 62 steckt ein Stecker 64, der direkt an den metallischen Deckel 48 angeschweißt ist. Zwei weitere Stecker 65 treten durch ein an den Deckel angespritztes Kunststoffteil 66 elektrisch vom Deckel isoliert durch diesen hindurch und stecken in den Steckhülsen 60 der Metallbleche 59. An der Außenseite des Deckels kann an die beiden Stecker 65 jeweils ein nicht näher dargestelltes Kabel angeschlossen werden. Der Deckel selbst ist mit Masse verbunden. In Fig. 3 sind außerdem noch drei Schleiffedern 67 erkennbar, die zu einem Endlagenschalter des Motors gehören und von denen eine direkt an den Deckel angeschweißt ist, während die beiden anderen mit elektrisch isoliert durch den Deckel hindurchgeführten Steckern 68 verstemmt sind, an die außen am Deckel Kabel angeschlossen werden können.

Die Halterung 40 ist mit zwei Zapfen 75, in denen auch die Bleche 57 geführt sind, in die Kohlenhalterplatte 35 hineingesteckt. Außerdem hintergreift die Halterung 40 die Kohlenhalterplatte 35 mit einem Rastbein 76. Insgesamt ergibt sich dadurch eine gute mechanische Befestigung der Halterung 40 auf der Kohlenhalterplatte 35, so daß diese beiden Teile nach ihrem Zusammenbau eine vormontierte Baueinheit bilden. Diese Baueinheit wird bei der Endmontage des elektrischen Motors in einer Richtung senkrecht zum Lagerschild 23 auf diesen aufgesetzt, wobei die Halterung 40 durch den Durchgang 43 hindurchgeschoben wird und in die Tasche 44 des Getriebetopfes 22 gelangt. Danach wird der Getriebetopf 22 durch Aufsetzen des Deckels 48 verschlossen, wobei die Stecker 64 und 65 in die Steckhülsen 60 eingedrückt werden.

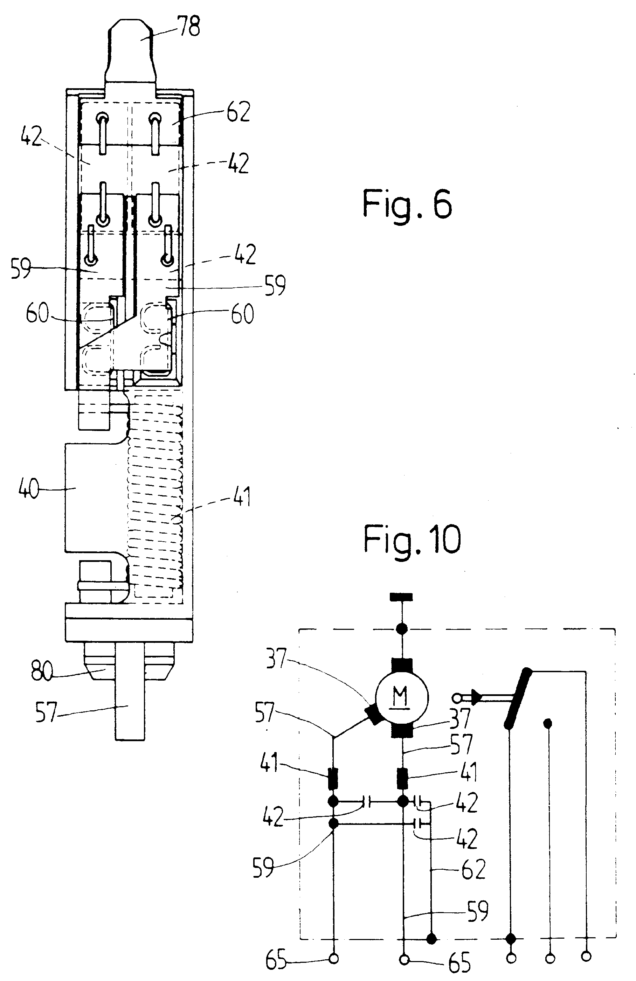

Die in den Fig. 4 und 5 gezeigte, aus einer Kohlenhalterplatte 35 und einer Halterung 40 bestehende Baueinheit sowie auch die in Fig. 6 allein gezeigte Halterung sind ähnlich wie die Ausführung nach den Fig. 1 und 2 aufgebaut. Man erkennt auf der einen Seite der Kohlenhalterplatte zwei von drei Köchern 36 für Schleifkohlen und zusätzlich einen Thermoschalter 77. Die Halterung hat in einer ersten Kammer 55 wiederum zwei Entstörspulen 41 aufgenommen, von denen jede über ein Metallblech 57, das im Gegensatz zu der Ausführung nach den Fig. 1 und 2 frei durch die Kohlenhalterplatte 35 hindurchtritt, mit einer Kohlelitze 58 elektrisch leitend verbunden ist. Die beiden Spulen 41 sind außerdem wiederum über zwei Metallbleche 59 mit Steckhülsen 60 mit Kondensatoren 42 elektrisch leitend verbunden, die sich in einer zweiten Kammer 56 der Halterung 40 befinden. Insgesamt sind nun nicht zwei, sondern drei Kondensatoren 42 vorhanden, von denen einer zwischen die beiden Bleche 59 und die beiden anderen jeweils zwischen einem Blech 59 und einem gemeinsamen Masseblech 62 eingeschleift sind. Dieses Masseblech 62 ist nun nicht mit einer Steckhülse, sondern mit einem von der Halterung 40 wegzeigenden leicht gewölbten Kontaktabschnitt 78 versehen. Auf dessen Verbindung zum Getriebetopf bzw. zum Deckel wird später noch näher eingegangen werden. Die Form der Bleche 59 und 62 sowie die Verbindungen der Kondensatoren damit gehen noch näher aus Fig. 6 hervor.

Auch die mechanische Verbindung zwischen der Halterung 40 und der Kohlenhalterplatte 35 ist anders als bei der Ausführung nach den Fig. 1 und 2 gestaltet. Und zwar besitzt die Kohlenhalterplatte 35 einen kreuzförmigen Durchbruch 79, der in Fig. 5 gestrichelt eingezeichnet ist. Durch diesen Durchbruch taucht die Halterung 40 mit zwei parallel zueinander verlaufenden und nur durch einen schmalen Schlitz voneinander getrennten, länglichen Rastbeinen 80 hindurch und hintergreift die Kohlenhalterplatte 35. Die beiden Metallbleche 57 befinden sich seitlich der beiden Rastbeine 80 in den noch verbleibenden Ausbuchtungen des Durchbruchs 79. Dadurch, daß die Halterung 40 auf der einen Seite der Kohlenhalterplatte 35 aufsitzt und mit den Rastbeinen 80 die andere Seite der Kohlenhalterplatte hintergreift sowie am Rand des Durchbruchs 79 anliegt, sind die Kohlenhalterplatte 35 und die Halterung 40 mechanisch fest miteinander verbunden.

Aus Fig. 5 ist noch besonders deutlich die rechteckige und kompakte Außenkontur der Halterung 40 ersichtlich.

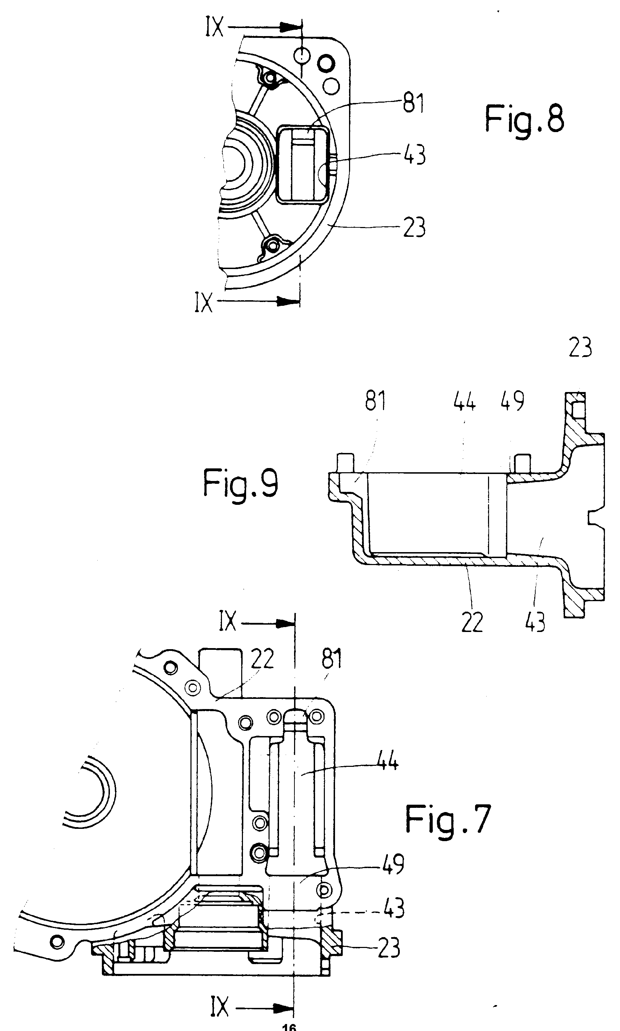

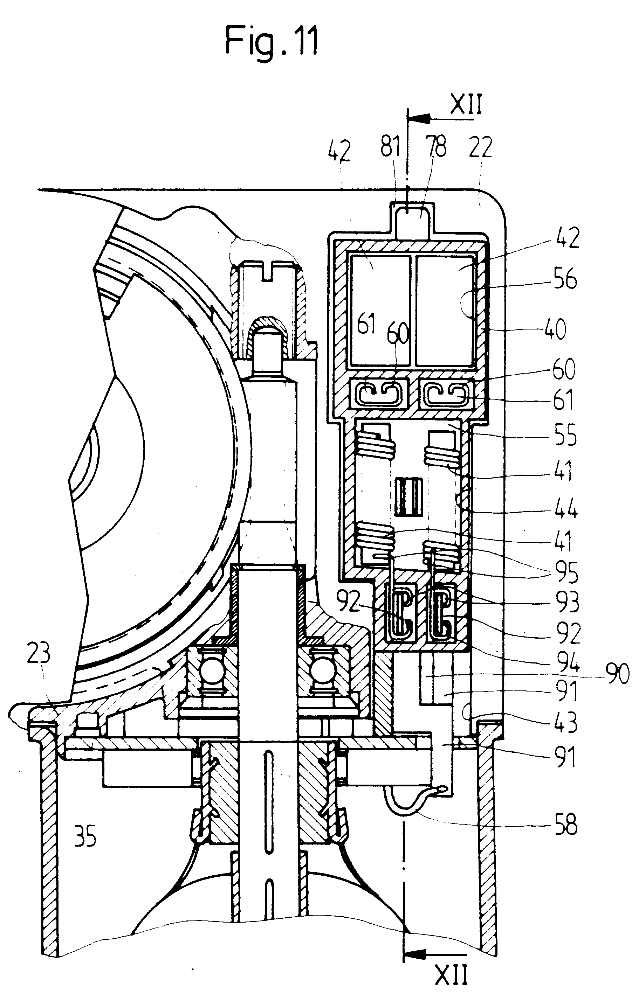

Der Getriebetopf 22 einschließlich Lagerschild 23 aus den Fig. 7 bis 9 ist so gestaltet, daß er eine Halterung 40 gemäß den Fig. 4 bis 6 aufnehmen kann. Die Form der Tasche 44 und des Durchgangs 43 wird besonders deutlich. So erkennt man insbesondere aus den Fig. 7 und 9 den am Lagerschild 23 entlanggeführten Abschnitt 49 des Auflagerandes für einen Deckel 48. Dabei kann der Deckel natürlich auch über eine Dichtung auf dem Getriebetopf aufliegen. Man erkennt außerdem an der dem Durchgang 43 abgewandten Seite der Tasche 44 eine Vertiefung 81 im Getriebetopf 22, deren Tiefe geringer ist als die der Tasche 44 und die zur Tasche 44 hin offen ist. In diese Vertiefung 81 gelangt bei der Endmontage der Kontaktabschnitt 78 am Metallblech 62.

Die Fig. 8 zeigt besonders deutlich die Querschnittsform des Durchgangs 43, die sich von der Innenseite des Lagerschilds 23 aus zur Tasche 44 hin etwas verjüngt und der die Außenkontur der Halterung 40 entspricht. Es ist besonders gut erkennbar, daß der Durchgang 43 rundum, insbesondere auch zum Außenrand des Lagerschilds 23, geschlossen ist.

In der Schaltanordnung nach Fig. 10 sind die einzelnen elektrischen Bauteile und die Verbindungen zwischen Ihnen mit denselben Bezugszeichen versehen wie in den Fig. 3 bis 6. Jede von zwei Entstörspulen 41 ist über eine Leitung, die von einem Metallblech 57 gebildet wird, mit einer Schleifkohle 37 des Motors verbunden. Andererseits ist jede Spule 41 auch an eine Leitung gelegt, die durch ein Metallblech 59 gebildet wird, das mit den Steckern 65 verbunden ist. Ein erster Kondensator 42 ist mit beiden Metallblechen 59 verbunden. Die beiden anderen Kondensatoren 42 sind auf ihrer einen Seite ebenfalls an ein Metallblech 59 angeschlossen und auf ihrer anderen Seite über eine gemeinsame Leitung, die durch das Metallblech 62 gebildet wird, mit Masse verbunden.

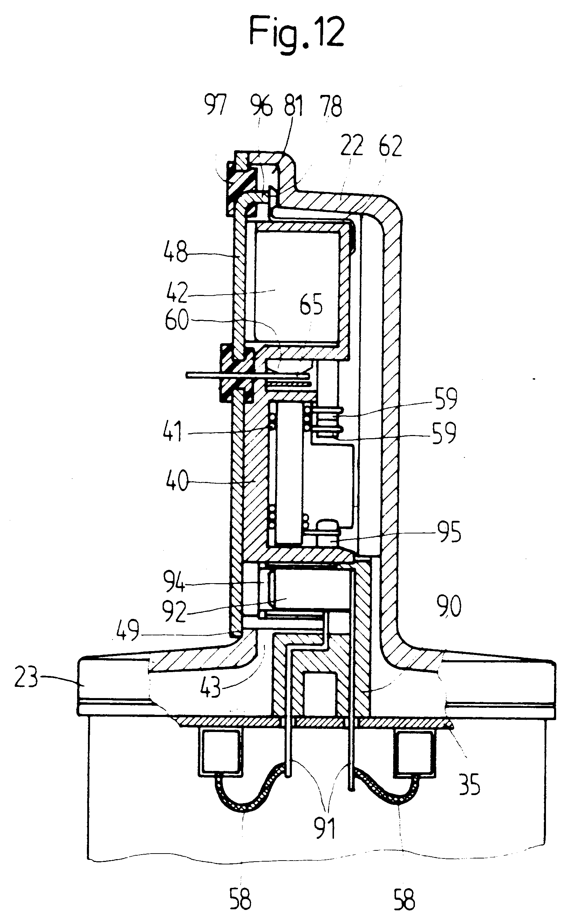

Der in den Fig. 11 und 12 gezeigte Scheibenwischermotor entspricht vom Aufbau her dem Motor aus den Fig. 1 und 2. Die Entstörmittel in Form von zwei Spulen 41 und zwei Kondensatoren 42 sind wiederum in zwei Kammern 55 und 56 einer Halterung 40 untergebracht, die in einer Tasche 44 des Getriebetopfes 22 liegt. In zwei kleineren Kammern 61 zwischen den beiden Kammern 55 und 56 befinden sich wiederum zwei Steckhülsen 60, die an zwei Metallbleche 59 angeformt sind, über die die Spulen 41 und die Kondensatoren 42 elektrisch leitend miteinander verbunden sind.

Die Halterung 40 ist nun jedoch im Querschnitt so groß, daß sie nicht durch den Durchgang 43 im Lagerschild 23 hindurch in die Tasche 44 eingeschoben werden kann. Vielmehr wird die Halterung 40 nun von der Seite des Deckels 48 aus in die Tasche 44 eingelegt. Damit dies möglich ist, muß sie kürzer sein als die Halterungen 40 aus den Fig. 1 und 2 bzw. 4 bis 6, da sie sonst nicht an dem Abschnitt 49 des Auflagerandes für den Deckel vorbeigebracht werden könnte. Um die offene Seite der Tasche 44 größer als bei der Ausführung nach den Fig. 1 und 2 zu machen, ist dieser Abschnitt 49 zwar schmäler als bei der genannten Ausführung, jedoch, wie die Fig. 12 zeigt, noch soweit vorhanden, daß sich eine Auflagefläche für den Deckel 48 ergibt. Um die Halterung 40 kürzer machen zu können, sind außerdem die beiden Steckhülsen 60 nicht in Längsrichtung der Halterung, sondern quer dazu angeordnet.

Zur elektrisch leitenden Verbindung der beiden Spulen 41 mit den Kohlelitzen 58 zweier Schleifkohlen ist auf der ebenen Kohlenhalterplatte 35 ein Zwischenstück 90 aus Kunststoff befestigt, das durch den Durchgang 43 im Lagerschild 23 hindurch bis in die Tasche 44 hineinreicht. In dem Zwischenstück 90 sind zwei Metallbleche 91 befestigt, die durch die Kohlenhalterplatte 35 hindurchtreten und an die auf der dem Lagerschild 23 abgewandten Seite der Kohlenhalterplatte 35 die beiden Litzen 58 angeschweißt sind. Jenseits des Durchgangs 43 in der lasche 44 ragen die beiden Metallbleche 91 als Flachstecker 92 senkrecht zum Deckel 48 hoch. Die Halterung 40 enthält in zwei zusätzlichen Kammern 93 vor der Kammer 55 zwei Steckhülsen 94, die einstückig mit zwei Metallblechen 95 ausgebildet sind, von denen jedes aus der Kammer 55 in eine Kammer 93 führt und mit einer Spule 41 elektrisch leitend verbunden ist. Bei der Endmontage des Motors wird zunächst die Kohlenhalterplatte 35 auf den Lagerschild 23 aufgesetzt, wobei das Zwischenstück 90 in den Durchgang 43 eintaucht. Beim Einbringen der Halterung 40 in die Tasche 44 werden dann die Steckhülsen 94 auf die Flachstecker 92 aufgeschoben.

Die Halterung 40 kann schon vor ihrem Einsetzen in die Tasche 44 am Deckel 48 befestigt werden, so daß Deckel 48 und Halterung 40 eine vormontierte Baueinheit bilden. Bei der Montage von Deckel 48 und Halterung 40 aneinander werden zwei isoliert durch den Deckel 48 hindurchgeführte Stecker 65 in die Steckhülsen 60 hineingesteckt. Die Halterung 40 kann z.B. dadurch am Deckel 48 befestigt werden, daß sie mit Nietzapfen durch Löcher des Deckels 48 hindurchgreift und diese Nietzapfen auf der Oberseite des Deckels verformt werden. Die Halterung kann jedoch auch an den Deckel 40 angeklipst werden. Ebenso ist es denkbar, die Halterung 40 direkt an den Deckel anzuspritzen.

Die Halterung 40 nach den Fig. 11 und 12 besitzt wie die Halterung nach den Fig. 4 bis 6 ein Metallblech 62, an das die beiden Kondensatoren 42 gemeinsam angelötet sind und das einen Kontaktabschnitt 78 aufweist, der sich in einer Vertiefung 81 des Getriebetopfes 22 befindet. Aus dem Deckel 48 ist eine Lasche 96 ausgeschnitten und senkrecht in die Vertiefung 81 des Getriebetopfes 22 abgebogen, wo sie gegen den Kontaktabschnitt 78 des Metallblechs 62 drückt. Das durch die abgebogene Lasche 96 entstandene Loch im Deckel 48 ist durch einen direkt an den Deckel angespritzten Kunsstoffpfropfen 97 verschlossen. Auch für die Halterung 40 aus den Fig. 4 bis 6, die in einen Getriebetopf gemäß den Fig. 7 bis 9 eingesetzt wird, ist ein Deckel 48 mit einer Lasche 96 vorgesehen, wie er in Fig. 12 gezeigt ist.

## Patentansprüche

1. Elektrischer Motor, insbesondere elektrischer Kleinmotor zum Antrieb von Scheibenwischern an Kraftfahrzeugen, mit einem topfförmigen Motorgehäuse (20), mit einem Getriebegehäuse, das mit einem Lagerschild (23) eine Stirnseite des Motorgehäuses (20) verschließt und einem Getriebetopf (22) zur Aufnahme von Getriebeelementen (28, 29) und einen den Getriebetopf (22) verschließenden Deckel (48) besitzt, und mit einer sich in einer Tasche (44) des Getriebetopfes (22) befindenden Halterung (40) für ein elektrisches Bauteil, insbesondere für mindestens ein Entstörmittel wie Spule (41), Kondensator (42) oder Diode, das mit einer im Motorgehäuse (20) angeordneten Schleifkohle (37) leitend verbunden ist, wobei das Bauteil (41, 42) durch einen Durchgang (43) im Lagerschild (23) hindurch mit der Schleifkohle (37) verbunden ist, dadurch **gekennzeichnet**, daß sich die Halterung (40) in einer Tasche (44) im Inneren des Getriebetopfes (22) befindet, daß die Tasche vom Deckel (48) verschlossen ist, und daß der Durchgang (43) von der Tasche (44) durch den Lagerschild (23) in das Motorgehäuse (20) führt und nach außen geschlossen ist.

2. Elektrischer Motor nach Anspruch 1, dadurch gekennzeichnet, daß der Getriebetopf (22) eine Schnecke (28) und ein mit dieser Schnecke (28) kämmendes Schneckenrad (29) enthält und daß sich die Tasche (44) für die Halterung (40), vom Schneckenrad (29) aus gesehen, jenseits der Schnecke (28) befindet.

3. Elektrischer Motor nach Anspruch 1 oder 2, dadurch gekennzeichnet, daß die Tasche (44) für die Halterung (40) gegen andere Bereiche des Getriebetopfes (22) hin, insbesondere gegen die Bereiche hin, die Getriebeelemente (28, 29) enthalten, abgeschlossen ist.

4. Elektrischer Motor nach einem der Ansprüche 1 bis 3, dadurch gekennzeichnet, daß der Auflagerand des Getriebetopfes (22) für den Deckel (48) im Bereich des Durchgangs (43) entlang des Lagerschilds (23) fortgeführt ist.

5. Elektrischer Motor nach einem der Ansprüche 1 bis 4, dadurch gekennzeichnet, daß die Halterung (40) und eine im Motorgehäuse (20) angeordnete Kohlenhalterplatte (35) durch den Durchgang (43) hindurch aneinander befestigt sind.

6. Elektrischer Motor nach Anspruch 5, dadurch gekennzeichnet, daß die Halterung (40) durch den Durchgang (43) hindurch bis hin zur Kohlenhalterplatte (35) reicht.

7. Elektrischer Motor nach Anspruch 6, dadurch gekennzeichnet, daß die Halterung (40) mit wenigstens einem Rastbein (76, 80) durch einen Durchgang (79) in der Kohlenhalterplatte (35) hindurchtaucht und die Kohlenhalterplatte (35) hintergreift.

8. Elektrischer Motor nach einem vorhergehenden Anspruch, dadurch gekennzeichnet, daß die Halterung (40) durch den Durchgang (43) hindurch in die Tasche (44) einschiebbar ist.

9. Elektrischer Motor nach einem der Ansprüche 1 bis 7, dadurch gekennzeichnet, daß die Halterung (40) von einer durch den Deckel (48) verschließbaren Seite aus in die Tasche (44) einsetzbar ist.

10. Elektrischer Motor nach Anspruch 9, dadurch gekennzeichnet, daß die Halterung (40) am Deckel (48) befestigt ist.

11. Elektrischer Motor nach einem vorhergehenden Anspruch, dadurch gekennzeichnet, daß sich in dem Durchgang (43) des Lagerschilds (23) zwischen der Halterung (40) und einer im Motorgehäuse (20) angeordneten Kohlenhalterplatte (35) ein Zwischenstück (90) mit zumindest einem elektrischen Leiter (91) befindet.

12. Elektrischer Motor nach einem vorhergehenden Anspruch, dadurch gekennzeichnet, daß die Halterung (40) wenigstens einen Stecker (60, 94) zur elektrisch leitenden Verbindung mit einem Gegenstecker (64, 65, 92) aufweist.

13. Elektrischer Motor nach Anspruch 12, dadurch gekennzeichnet, daß ein Gegenstecker (64, 65) am Deckel (48) sitzt.

14. Elektrischer Motor nach Anspruch 12 oder 13, dadurch gekennzeichnet, daß der Gegenstecker (92) am Zwischenstück (90) sitzt.

15. Elektrischer Motor nach einem vorhergehenden Anspruch, dadurch gekennzeichnet, daß Entstörmittel (41, 42) untereinander sowie Entstörmittel (41, 42) und Schleifkohlen (37) über Metallbleche (57, 59, 91, 95) leitend miteinander verbunden sind.

16. Elektrischer Motor nach Anspruch 15, dadurch gekennzeichnet, daß wenigstens eines der Metallbleche (59, 91, 95) abschnittsweise zu einem Stecker (60, 92, 94) geformt ist.

17. Elektrischer Motor nach einem vorhergehenden Anspruch, dadurch gekennzeichnet, daß ein an der Halterung (40) befestigtes Metallblech (62) zur elektrischen Verbindung eines Entstörmittels (42) mit dem Getriebegehäuse, insbesondere dem Deckel (48), zwischen Deckel (48) und Getriebetopf (22) eingeklemmt ist.

18. Elektrischer Motor nach Anspruch 17, dadurch gekennzeichnet, daß aus dem Deckel (48) eine Lasche (96) ausgeschnitten und abgebogen ist und auf das vorzugsweise in eine Vertiefung (81) des Getriebetopfes (22) hineinragende Metallblech (62) drückt.

19. Elektrischer Motor nach Anspruch 18, dadurch gekennzeichnet, daß das durch die abgebogene Lasche (96) entstandene Loch im Deckel (48) mit Kunststoff (97) ausgespritzt ist.

20. Elektrischer Motor nach einem vorhergehenden Anspruch, dadurch gekennzeichnet, daß die Halterung (40) eine erste Kammer (55) für eine oder mehrere Entstörspulen (41) und eine zweite Kammer (56) für einen oder mehrere Entstörkondensatoren (42) aufweist.

21. Elektrischer Motor nach Anspruch 20, dadurch gekennzeichnet, daß die Kammern (55, 56), in einer Richtung senkrecht zum Lagerschild (23) betrachtet, hintereinander liegen.

22. Elektrischer Motor nach Anspruch 21, dadurch gekennzeichnet, daß die Kammer (56) für einen Entstörkondensator (42) weiter vom Lagerschild (23) entfernt ist als die Kammer (55) für eine Entstörspule (41).

23. Elektrischer Motor nach einem der Ansprüche 20 bis 22, dadurch gekennzeichnet, daß im Bereich zwischen den beiden Kammern (55, 56) wenigstens ein Stecker (60) an der Halterung (40) vorgesehen ist.

## Claims

1. An electric motor, in particular a small-size electric motor for driving windshield wipers on motor vehicles, comprising a cup-shaped motor housing (20), a gear housing closing one front side of the motor housing (20) by means of an end shield (23) and being furnished with a cup-shaped section (22) for accommodating gearing elements (28, 29) and a cover (48) closing the cup-shaped section (22) of the gear housing, and comprising a holding device (40) for an electric component, in particular for at least one noise suppressor such as coil (41), capacitor (42) or diode, which holding device is in electrically conductive connection with a carbon brush (37) arranged in the motor housing (20), the component (41, 42) being connected with the carbon brush (37) through a passage (43) in the end shield (23),
**characterized** in that the holding device (40) is arranged in a pocket (44) in the interior of the cup-shaped section (22) of the gear housing, in that the pocket is closed by the cover (48), and in that the passage (43) extends from the pocket (44) through the end shield (23) into the motor housing (20) and is closed towards the outside.

2. An electric motor as claimed in claim 1,
**characterized** in that the cup-shaped section (22) of the gear housing comprises a worm (28) and a worm wheel (29) meshing with the worm (28), and in that the pocket (44) for the holding device (40), when viewed from the worm wheel (29), is positioned beyond the worm (28).

3. An electric motor as claimed in claim 1 or claim 2,
**characterized** in that the pocket (44) for the holding device (40) is closed towards other areas of the cup-shaped section (22) of the gear housing, in particular towards areas containing gearing elements (28, 29).

4. An electric motor as claimed in any one of the claims 1 to 3,
**characterized** in that the supporting rim of the cup-shaped section (22) of the gear housing for the cover (48) is continued in the area of the passage (43) alongside the end shield (23).

5. An electric motor as claimed in any one of the claims 1 to 4,
**characterized** in that the holding device (40) and a brush holder plate (35) arranged in the motor housing (20) are fitted to each other through the passage (43).

6. An electric motor as claimed in claim 5,
**characterized** in that the holding device (40) extends through the passage (43) as far as to the brush holder plate (35).

7. An electric motor as claimed in claim 6,
**characterized** in that the holding device (40) by way of at least one locking leg (76, 80) passes through a passage (79) in the brush holder plate (35) and grips behind the brush holder plate (35).

8. An electric motor as claimed in any one of the preceding claims,
**characterized** in that the holding device (40) is adapted to be slipped through the passage (43) into the pocket (44).

9. An electric motor as claimed in any one of the claims 1 to 7,
**characterized** in that the holding device (40) is insertable into the pocket (44) from a side to be closed by the cover (48).

10. An electric motor as claimed in claim 9,
**characterized** in that the holding device (40) is fitted to the cover (48).

11. An electric motor as claimed in any one of the preceding claims,
**characterized** in that in the passage (43) of the end shield (23) between the holding device (40) and a brush holder plate (35) arranged in the motor housing (20) an internmediary (90) with at least one electric conductor (91) is positioned.

12. An electric motor as claimed in any one of the preceding claims,
**characterized** in that the holding device (40) is provided with at least one plug (60, 94) for an electrically conductive connection with a counterplug (64, 65, 92).

13. An electric motor as claimed in claim 12,
**characterized** in that a counterplug (64, 65) is fitted to the cover (48).

14. An electric motor as claimed in claim 12 or claim 13,
**characterized** in that the counterplug (92) is fitted to the intermediary (90).

15. An electric motor as claimed in any one of the preceding claims,
**characterized** in that noise suppressors (41, 42) are interconnected, and noise suppressors (41, 42) and carbon brushes (37) are connected with each other in an electrically conductive manner via sheet metal strips (57, 59, 91, 95).

16. An electric motor as claimed in claim 15,
**characterized** in that at least one of the sheet metal strips (59, 91, 95) in sections froms a plug (60, 92, 94).

17. An electric motor as claimed in any one of the preceding claims,
**characterized** in that a sheet metal strip (62) mounted on the holding device (40) for electrically connecting a noise suppressor (42) with the gear housing, in particular the cover (48), is clamped in between cover (48) and cup-shaped section (22) of the gear housing.

18. An electric motor as claimed in claim 17,
**characterized** in that a lug (96) is cut out and deflected from the cover (48) and is pressed on the sheet metal strip ((62) which preferably extends into a deepening (81) of the cup-shaped section (22) of the gear housing.

19. An electric motor as claimed in claim 18,
**characterized** in that the hole in the cover (48) caused by the deflected lug (96) is injection moulded with plastic material (97).

20. An electric motor as claimed in any one of the preceding claims,
**characterized** in that the holding device (40) comprises a first chamber (55) for one or more noise-suppresssing coils (41) and a second chamber (56) for one or more noise-suppressing capacitors (42).

21. An electric motor as claimed in claim 20,
**characterized** in that the chambers (55, 56) are positioned one behind the other when viewed in a direction perpendicular to the end shield (23).

22. An electric motor as claimed in claim 21,
**characterized** in that the chamber (56) for a noise-suppressing capacitor (42) is farther away from the end shield (23) than the chamber (55) for a noise-suppressing coil (41).

23. An electric motor as claimed in any one of the claims 20 to 22,
**characterized** in that in the area between the two chambers (55, 56) at least one plug (60) is provided on the holding device (40).

## Revendications

1. Moteur électrique, en particulier petit moteur électrique pour entraîner des essuie-glace dans des véhicules à moteur, comportant un boîtier de moteur (20) en forme de pot, un boîtier d'engrenages, qui ferme par un flasque (23) une face avant du boîtier (20) du moteur et possède un carter d'engrenages (22) pour recevoir des éléments d'engrenage (28, 29) et un couvercle (48) fermant le carter d'engrenages (22), et comportant une fixation (40), qui se trouve dans une poche (44) du carter d'engrenages (22), pour un composant électrique, en particulier pour au moins un moyen de déparasitage tel qu'une bobine (41), un condensateur (42) ou une diode, qui est connecté(e) de manière conductrice avec un balai de charbon (37) agencé dans le boîtier (20) du moteur, moteur dans lequel le composant (41, 42) est connecté avec le balai de charbon (37) à travers un passage du flasque (23), caractérisé en ce que la fixation (40) se trouve dans une poche (44) à l'intérieur du carter d'engrenages (22), la poche est fermée par le couvercle (48) et le passage (43) conduit de la poche (44) au boîtier (20) du moteur à travers le flasque (23) et est fermé vers l'extérieur.

2. Moteur électrique selon la revendication 1, caractérisé en ce que le carter d'engrenages (22) contient un vis sans fin (28) et une roue tangente (29) s'engrénant sur cette vis sans fin (28), et la poche (44) pour la fixation (40) se trouve, vue depuis la roue tangente (29), de l'autre côté de la vis sans fin (28).

3. Moteur électrique selon la revendication 1 ou 2, caractérisé en ce que la poche (44) pour la fixation (40) est fermée vis-à-vis d'autres zones du carter d'engrenages (22), en particulier vis-à-vis des zones qui contiennent les éléments d'engrenage (28, 29).

4. Moteur électrique selon l'une quelconque des revendications 1 à 3, caractérisé en ce que le bord d'appui du carter d'engrenages (22) pour le couvercle (48) continue dans la zone du passage (43) le long du flasque (23).

5. Moteur électrique selon l'une quelconque des revendications 1 à 4, caractérisé en ce que la fixation (40) et une plaque porte-charbon (35) agencée dans le boîtier (20) du moteur sont assujetties l'une à l'autre à travers le passage (43).

6. Moteur électrique selon la revendication 5, caractérisé en ce que la fixation (40) s'étend jusqu'à la plaque porte-charbon (35) à travers le passage (43).

7. Moteur électrique selon la revendication 6, caractérisé en ce que la fixation (40) passe à travers un passage (79) de la plaque porte-charbon (35) via au moins un bras d'encliquetage (76, 80) et s'accroche à ladite plaque porte-charbon (35) par l'arrière.

8. Moteur électrique selon l'une quelconque des revendications précédentes, caractérisé en ce que la fixation (40) peut être introduite dans la poche (44) à travers le passage (43).

9. Moteur électrique selon l'une quelconque des revendications 1 à 7, caractérisé en ce que la fixation (40) peut être introduite dans la poche (44) par un côté qui peut être fermé par le couvercle (48).

10. Moteur électrique selon la revendication 9, caractérisé en ce que la fixation (40) est fixée sur le couvercle (48).

11. Moteur électrique selon l'une quelconque des revendications précédentes, caractérisé en ce qu'une pièce intermédiaire (90) avec au moins un conducteur électrique (91) se trouve dans le passage (43) du flasque (23) entre la fixation (40) et une plaque porte-charbon (35) agencée dans le boîtier (20) du moteur.

12. Moteur électrique selon l'une quelconque des revendications précédentes, caractérisé en ce que la fixation (40) comporte au moins une fiche mâle (60, 94) pour se connecter électriquement sur une fiche femelle (64, 65, 92).

13. Moteur électrique selon la revendication 12, caractérisé en ce qu'une fiche femelle (64, 65) est logée dans le couvercle (48).

14. Moteur électrique selon la revendication 12 ou 13, caractérisé en ce que la fiche femelle (92) est logée dans la pièce intermédiaire (90).

15. Moteur électrique selon l'une quelconque des revendications précédentes, caractérisé en ce que des moyens de déparasitage (41, 42) sont interconnectés et les moyens de déparasitage (41, 42) et le balai de charbon (37) sont connectés l'un à l'autre de manière conductrice via des tôles métalliques (57, 59, 91, 95).

16. Moteur électrique selon la revendication 15, caractérisé en ce qu'au moins une des tôles métalliques (57, 91, 95) est conformée en fiche mâle (60, 92, 94) par sections.

17. Moteur électrique selon l'une quelconque des revendications précédentes, caractérisé en ce qu'une tôle métallique (62) assujettie à la fixation (40) est coincée entre le couvercle (48) et le carter d'engrenages (22) pour assurer une connexion électrique d'un moyen de déparasitage (42) avec le boîtier d'engrenages, en particulier avec le couvercle (48).

18. Moteur électrique selon la revendication 17, caractérisé en ce qu'une languette (96) est découpée dans le couvercle (48) et est repliée, et presse la tôle métallique (62) saillant de préférence dans un renfoncement (81) du carter d'engrenages (22).

19. Moteur électrique selon la revendication 18, caractérisé en ce que le trou formé par la languette repliée (96) dans le couvercle (48) est recouvert par pulvérisation d'une matière plastique (97).

20. Moteur électrique selon l'une quelconque des revendications précédentes, caractérisé en ce que la fixation (40) comprend une première chambre (55) pour une ou plusieurs bobines de déparasitage (41) et une deuxième chambre (56) pour un ou plusieurs condensateurs de déparasitage (42).

21. Moteur électrique selon la revendication 20, caractérisé en ce que les chambres (55, 56) sont agencées l'une derrière l'autre lorsqu'on les observe dans la direction perpendiculaire au flasque (23).

22. Moteur électrique selon la revendication 1, caractérisé en ce que la chambre (56) destinée à un condensateur de déparasitage (42) est plus éloignée du flasque (23) que la chambre (55) destiné à une bobine de déparasitage (41).

23. Moteur électrique selon l'une quelconque des revendications 20 à 22, caractérisé en ce qu'au moins une fiche mâle (60) est prévue sur la fixation (40) dans la zone comprise entre les deux chambres (55, 56).
